# EUROPÄISCHE PATENTSCHRIFT

(11) **EP 1 939 417 B1**
(45) Veröffentlichungstag und Bekanntmachung des Hinweises auf die Patenterteilung: **17.03.2010**
(21) Anmeldenummer: 07122719.3
(22) Anmeldetag: 10.12.2007
(51) Int. Cl.: F01N 3/00, F01N 3/20

(54) **Abgasanlage für eine Brennkraftmaschine**
Exhaust system for an internal combustion engine
Système d'échappement pour un moteur à combustion interne

(30) Priorität: 21.12.2006 DE 102006061790
(43) Veröffentlichungstag der Anmeldung: 02.07.2008
(73) Patentinhaber: J. Eberspächer GmbH & Co. KG, 73730 Esslingen (DE)
(72) Erfinder: Wirth, Georg, 73230 Kirchheim/Teck (DE); Neumann, Felix, 73732 Esslingen (DE)
(74) Vertreter: BRP Renaud & Partner

(56) Entgegenhaltungen:
- EP-A- 0 257 236
- EP-A- 1 371 824

## Beschreibung

Die vorliegende Erfindung betrifft eine Abgasanlage für eine Brennkraftmaschine, insbesondere in einem Kraftfahrzeug, mit den Merkmalen des Oberbegriffs des Anspruchs 1.

Zur Reduzierung von Stickoxiden ist es bekannt, in einem Abgas führenden Abgasstrang einer Abgasanlage ein SCR-Katalysator-System anzuordnen, wobei SCR für selektive katalytische Reduktion steht. Stromauf des SCR-Katalysator-Systems kann am Abgasstrang eine Einspritzeinrichtung angeordnet werden, mit deren Hilfe eine wässrige Harnstofflösung in den Abgasstrang eingespritzt werden kann, sogenanntes AdBlue-System (AdBlue^{®}). Im Betrieb der mit der Abgasanlage ausgestatteten Brennkraftmaschine sprüht die Einspritzeinrichtung mit vorbestimmter Dosierung die Harnstofflösung in den Abgasstrom ein. Durch Hydrolyse entsteht aus dem Harnstoff Ammoniak, der im SCR-Katalysator die Umwandlung der Stickoxide in Stickstoff und Wasser bewirkt.

Aus Bauraumgründen ist es ebenfalls üblich, die Abgasanlage bei einem Kraftfahrzeug entlang eines Unterbodens anzuordnen. Durch die tiefe Anordnung der einzelnen Komponenten der Abgasanlage kann sich gegebenenfalls anfallende Kondensationsflüssigkeit im Bereich dieser Komponenten sammeln. Bei SCR-Katalysator-Systemen hat sich gezeigt, dass Lagermatten, mit denen einzelne Katalysator-Elemente in einem Gehäuse des SCR-Katalysator-Systems gelagert, gehaltert, gegen Vibrationen geschützt und thermisch isoliert sind, im Bereich der anfallenden Kondensationsflüssigkeit angeordnet sind und sich dementsprechend damit vollsaugen. Bei hinreichender Temperatur der Abgasanlage kommt es in der Regel zu einer rückstandsfreien Verdampfung der Kondensationsflüssigkeit, so dass in der Regel keine Funktionsbeeinträchtigung auftritt. Bei niedrigen Umgebungstemperaturen, im Kurzstreckenbetrieb sowie bei modernen Dieselmotoren erreicht die Abgasanlage zunehmend seltener die für die Verdampfung der Kondensationsflüssigkeit erforderlichen Temperaturen.

In Verbindung mit einer Harnstoffeinspritzung kann es bei bestimmten Betriebszuständen auch zu einer Kondensation der eingespritzten Harnstofflösung kommen. Beim Verdampfen des Wasseranteils dieser Lösung können sich körnige Ablagerungen aus Harnstoff und anderen Stickstoffverbindungen bilden, die erst bei deutlich höheren Temperaturen wieder verdampfen. Sofern sich derartige Ablagerungen in den Lagermatten keramischer Katalysatorelemente einlagern, können sich die Eigenschaften dieser Lagermatten nachteilig ändern. Beispielsweise wird die schwingungsdämpfende Wirkung ebenso reduziert wie die thermische Isolation. Die Lagermatte kann thermischen Wärmedehnungen nicht mehr elastisch folgen, wodurch sich die Haltewirkung der Lagermatte für das jeweilige Katalysatorelement reduziert und die Katalysatorelemente können sich im Gehäuse bewegen. Ebenso kann sich im Bereich der beeinträchtigten Lagermatten eine Bypassströmung ausbilden, die das jeweilige Katalysatorelement zwischen dem Gehäuse und dem Katalysatorelement umgeht.

Ebenso ist es bekannt, stromauf eines Oxidationskatalysators Kraftstoff einzuspritzen, um eine Aufheizung des Katalysators und/oder eines nachfolgenden Partikelfilters zu erreichen.

Aus der EP 1 371 824 A1 ist eine Abgasanlage für eine Brennkraftmaschine bekannt, die einen abgasführenden Abgasstrang aufweist, in dem ein Katalysatorsystem angeordnet ist. Stromauf dieses Katalysatorsystems ist am Abgasstrang eine Einspritzeinrichtung zum Einspritzen einer Flüssigkeit in den Abgasstrang angeordnet. Außerdem ist im Abgasstrang zwischen der Einspritzeinrichtung und dem Katalysatorsystem ein Sumpf ausgebildet, der ein Sammelvolumen zur Aufnahme von Kondensationsflüssigkeit aufweist. Bei der bekannten Abgasanlage ist der Sumpf durch einen unten liegenden Boden eines Gehäuses des Katalysatorsystems gebildet, der außerdem mit einem Kondensatablauf ausgestattet ist.

Die vorliegende Erfindung beschäftigt sich mit dem Problem, für eine Abgasanlage der eingangs genannten Art eine verbesserte Ausführungsform anzugeben, die sich insbesondere durch eine verbesserte Haltbarkeit des SCR-Katalysator-Systems auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in der Abgasanlage stromauf des jeweiligen Katalysator-Systems und stromab der Einspritzeinrichtung einen Sumpf auszubilden, in dem sich Kondensationsflüssigkeit sammeln kann. Sofern Kondensationsflüssigkeit anfällt, kann sie sich im Sumpf sammeln und auch bei entsprechenden Abgastemperaturen aus dem Sumpf verdampfen. Sofern dabei Festkörperablagerungen anfallen, verbleiben diese im Sumpf und können sich insbesondere nicht in eine Lagermatte einlagern, die im stromab des Sumpfes angeordneten Katalysator-System dazu dient, das jeweilige Katalysatorelement zu lagern. Hierdurch kann effektiv eine Beeinträchtigung dieser Lagermatte durch die Einlagerung von Festkörperrückständen verdampfter Kompensationsflüssigkeit reduziert werden.

Erfindungsgemäß ist dieser Sumpf nun in einem Einlasstrichter eines Katalysatorsystem enthaltenden Gehäuses angeordnet. Alternativ ist der Sumpf in einem Abgasrohr des Abgasstrangs ausgebildet, das zu einem Katalysator-System enthaltenden Gehäuse führt, wobei der Sumpf durch eine Mulde oder Ausbuchtung gebildet ist, die in einer den Strömungspfad begrenzenden Wandung des Abgasstrangs ausgebildet ist.

Bevorzugt ist eine Ausführungsform, bei welcher der Sumpf im Einbauzustand der Abgasanlage, insbesondere zumindest zwischen der Einspritzeinrichtung und dem Katalysator-System, an der tiefsten Stelle des Abgasstrangs ausgebildet ist. Durch diese Bauweise wird erreicht, dass Kondensationsflüssigkeit unabhängig davon, wo sich der jeweilige Niederschlag bildet, zum Sumpf fließen und sich darin sammeln kann. Hierdurch wird eine gezielte Sammlung und Verdampfung des Kondensats erreicht, wobei gleichzeitig eine gezielte Ablagerung zurückbleibender Festkörper im Sumpf begünstigt wird.

Bei vorteilhaften Ausführungsformen kann vorgesehen sein, den Sumpf im Abgasstrang so anzuordnen, dass sein Sammelvolumen zumindest von einem Teil der Abgasströmung beaufschlagt ist. Zusätzlich oder alternativ kann vorgesehen sein, den Abgasstrang zumindest im Bereich des Sumpfes thermisch zu isolieren. Durch die genannten Maßnahmen wird die Verdampfung der Kondensationsflüssigkeit begünstigt, da einerseits eine gezielte Anströmung des Kondensats im Sumpf und andererseits die Erwärmung des Kondensats im Sumpf begünstigt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten, prinzipiellen Längsschnitt durch einen Teil einer Abgasanlage im Bereich eines Sumpfes,
- Fig. 2: einen Querschnitt der Abgasanlage aus Fig. 1 entsprechend Schnittlinien II,
- Fig. 3: eine Ansicht wie in Fig. 1, jedoch bei einer anderen Ausführungsform,
- Fig. 4: eine Ansicht wie in Fig. 1, jedoch bei einer weiteren Ausführungsform,
- Fig. 5: eine stark vereinfachte, teilweise geschnittene Frontansicht eines mit der Abgasanlage ausgestatteten Kraftfahrzeugs,
- Fig. 6: eine stark vereinfachte, teilweise geschnittene Seitenansicht des Kraftfahrzeugs.

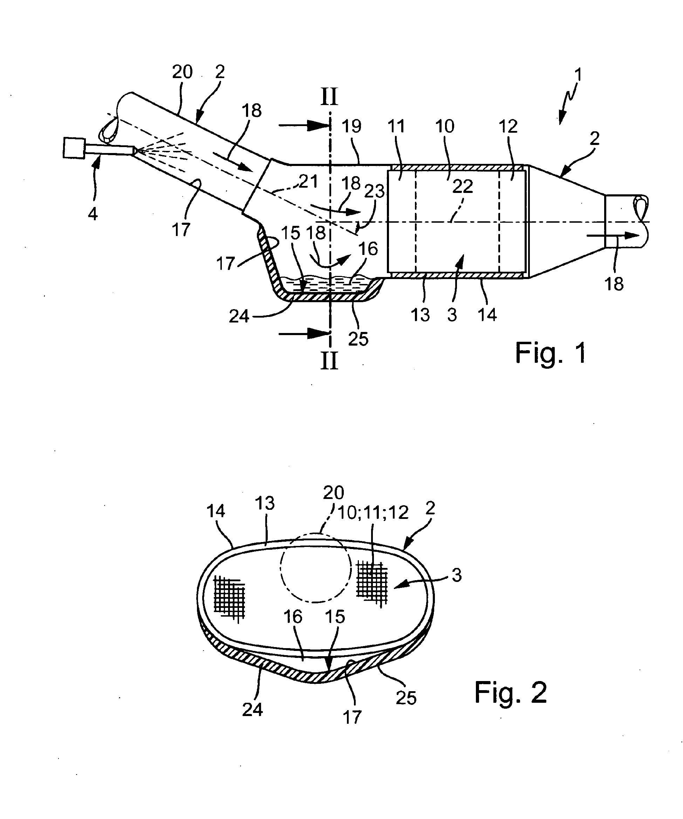

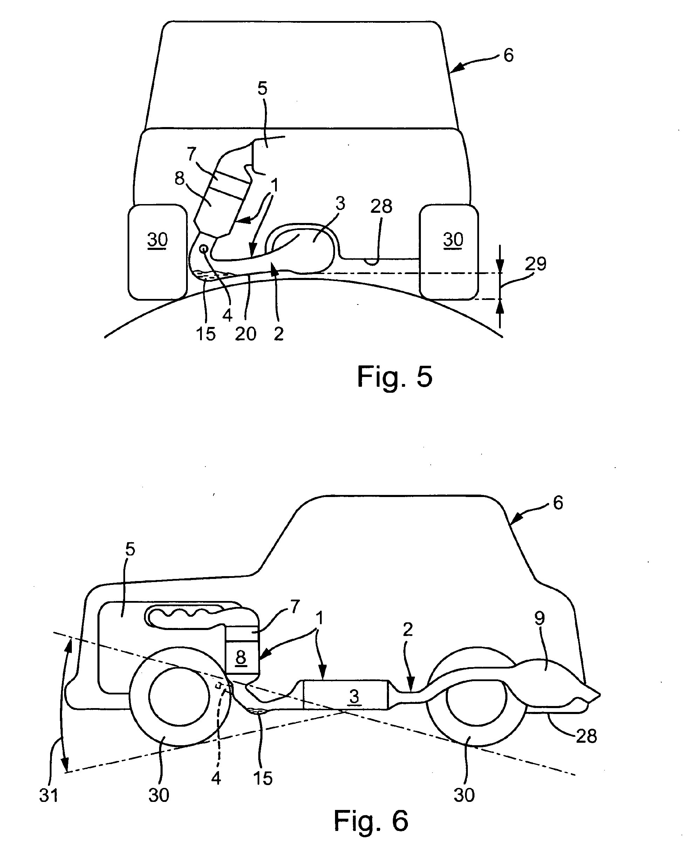

Entsprechend Fig. 1 umfasst eine Abgasanlage 1 einen abgasführenden Abgasstrang 2 und ein im Abgasstrang 2 angeordnetes Katalysator-System 3, das bevorzugt als SCR-Katalysator-System 3 ausgestaltet ist. Ferner umfasst die Abgasanlage 1 eine stromauf des SCR-Katalysator-Systems 3 am Abgasstrang 2 angeordnete Einspritzeinrichtung 4, die insbesondere so ausgestaltet ist, dass damit eine wässrige Harnstofflösung in den Abgasstrang 2 einspritzbar ist. Die Abgasanlage 1 dient entsprechend den Fig. 5 und 6 dazu, Abgase einer Brennkraftmaschine 5 von dieser wegzuführen. Beispielsweise sind die Brennkraftmaschine 5 und die Abgasanlage 1 hierzu in einem Kraftfahrzeug 6 angeordnet. Die Abgasanlage 1 kann im Abgasstrang 2 optional einen Oxidationskatalysator 7 sowie ein Partikelfilter 8 enthalten. Oxidationskatalysator 7 und Partikelfilter 8 sind dabei stromauf des SCR-Katalysator-Systems 3 sowie stromauf der Einspritzeinrichtung 4 im Abgasstrang 2 angeordnet. Das Partikelfilter 8 ist zweckmäßig stromab des Oxidationskatalysators 7 angeordnet. Stromab des SCR-Katalysator-Systems 3 kann die Abgasanlage 1 einen Schalldämpfer 9 beziehungsweise ein Schalldämpfersystem 9 im Abgasstrang 2 aufweisen.

Das SCR-Katalysator-System 3 umfasst zumindest ein SCR-Katalysatorelement 10, in dem mit Hilfe von Ammoniak Stickoxide zu Stickstoff und Wasser reduziert werden können. Optional kann dem SCR-Katalysator-Element 10 ein Hydrolyse-Katalysatorelement 11 vorgeschaltet sein, das eine Hydrolysereaktion unterstützt, bei der die in das Abgas eingespritzte wässrige Harnstofflösung in Ammoniak und Wasser umgesetzt wird. Des weiteren kann optional dem wenigstens einen SCR-Katalysatorelement 10 ein zusätzliches Oxidationskatalysatorelement 12 nachgeschaltet sein, das eine Umsetzung von gegebenenfalls im Abgas verbleibenden Resten an Ammoniak und Kohlenwasserstoffen ermöglicht.

Das jeweilige SCR-Katalysatorelement 10 ist zweckmäßig entlang seines Umfangs von einer Lagermatte 13 umhüllt. Im Beispiel gemäß Fig. 1 ist das SCR-Katalysatorelement 10 gemeinsam mit dem Hydrolyse-Katalysatorelement 11 und dem Oxidationskatalysatorelement 12 in einer gemeinsamen Lagermatte 13 eingehüllt. Die Lagermatte 13 dient zur Lagefixierung des jeweiligen Elements 10, 11, 12 in einem Gehäuse 14 des SCR-Katalysator-Systems 3. Die Lagermatte 13 bewirkt zum einen eine axiale Fixierung des jeweiligen SCR-Katalysatorelements 10 innerhalb des Gehäuses 14, was durch eine entsprechende radiale Verpressung der Lagermatte 13 zwischen dem Gehäuse 14 und dem jeweiligen SCR-Katalysatorelement 10 verzielt wird. Des weiteren dient die Lagermatte 13 zur thermischen Isolation des Gehäuses 14 gegenüber dem im Betrieb vergleichsweise heiß werdenden SCR-Katalysatorelement 10. Ferner bewirkt die Lagermatte 13 eine Abdichtung des zwischen dem Gehäuse 14 und dem jeweiligen SCR-Katalysatorelement 10 ausgebildeten und von der Lagermatte 13 ausgefüllten Ringspalts, um eine Bypassströmung zur Umgehung des jeweiligen SCR-Katalysatorelements 10 zu vermeiden. Die Lagermatte 13 besteht aus einem flexiblen Material, so dass es thermisch bedingten Dehnungsvorgängen, die zu Relativbewegungen zwischen dem jeweiligen SCR-Katalysatorelement 10 einerseits und dem Gehäuse 14 andererseits führen, elastisch folgen kann. Ferner bewirkt die Lagermatte 13 eine Schwingungsdämpfung für das jeweilige SCR-Katalysatorelement 10, das insbesondere aus einem keramischen Monolithen hergestellt sein kann und dementsprechend stoßempfindlich ist.

Die Abgasanlage 1 ist außerdem mit einem Sumpf 15 ausgestattet, der im Abgasstrang 2 stromab der Einspritzeinrichtung 4 und stromauf des SCR-Katalysator-Systems 3 angeordnet ist und der ein Sammelvolumen 16 aufweist. Das Sammelvolumen 16 dient zur Aufnahme von Kondensat beziehungsweise Kondensationsflüssigkeit, die im Betrieb der Abgasanlage 1 anfallen kann. Beispielsweise kann sich im Abgas mitgeführter Wasserdampf oder Kraftstoffdampf oder dampfförmige Harnstofflösung an kalten Wänden des Abgasstrangs 2, des Gehäuses 14 oder eines anderen Gehäuses niederschlagen. Ein derartiger Sumpf 15 zum Aufnehmen und Sammeln von Kondensationsflüssigkeit ist zwangsläufig innerhalb der Abgasanlage 1 an einer tiefliegenden Stelle angeordnet, damit Kondensat, das sich grundsätzlich an einer beliebigen Stelle innerhalb des Abgasstrangs 2 niederschlagen kann, schwerkraftbedingt in Richtung des Sumpfes 15 fließt.

Bei den hier gezeigten Ausführungsformen der Fig. 1 bis 6 ist der Sumpf 15 jeweils in einer Wandung 17 des Abgasstrangs 2, insbesondere des Gehäuses 14, ausgebildet, die einen durch Pfeile symbolisierten Strömungspfad 18 für die im Abgasstrang 2 geführte Abgasströmung begrenzt. Dabei ist der Sumpf 15 durch eine Mulde oder Ausbuchtung gebildet, die in die Wandung 17 eingearbeitet ist beziehungsweise daran ausgeformt ist. Bei den Ausführungsformen der Fig. 1 bis 4 ist der Sumpf 15 in das Gehäuse 14 des SCR-Katalysator-Systems 3 integriert, und zwar insbesondere in einen Einlasstrichter 19 des Gehäuses 14. Besagtes Gehäuse 14 ist dabei ein Bestandteil des Abgasstrangs 2, das zur Aufnahme des SCR-Katalysator-Systems 3 dient. Bei den Ausführungsformen der Fig. 5 und 6 ist der Sumpf 15 in einem Rohrkörper oder Abgasrohr 20 ausgebildet, wobei dieses Abgasrohr 20 zu dem das SCR-Katalysator-System 3 enthaltende Gehäuse 14 führt. Außerdem kann an diesem Abgasrohr 20 die Einspritzeinrichtung 4 angeordnet sein.

Zweckmäßig ist der Sumpf 15 im Einbauzustand der Abgasanlage 1 innerhalb des Abgasstrangs 2 so angeordnet, dass er von unten beziehungsweise nach unten an den Strömungsgrad 18 angrenzt. Bevorzugt sind dabei Ausführungsformen, bei denen der Sumpf 15 innerhalb der gesamten Abgasanlage 1 oder zumindest innerhalb eines sich von der Einspritzeinrichtung 4 bis zum SCR-Katalysator-System 3 erstreckenden Abschnitts der Abgasanlage 1 an der tiefsten Stelle des Abgasstrangs 2 angeordnet ist beziehungsweise die tiefste Stelle des Abgasstrangs 2 bildet. Hierdurch wird erreicht, dass zumindest die eingespritzte Harnstofflösung, sofern sie stromauf des SCR-Katalysator-Systems 3 kondensiert, in den Sumpf 15 gelangt und jedenfalls nicht bis in das SCR-Katalysator-System 3 beziehungsweise bis in die Lagermatte 13.

Zweckmäßig erfolgt die Anordnung des Sumpfes 15 innerhalb des Abgasstrangs 2 außerdem so, dass sein Sammelvolumen 16 im Betrieb der Abgasanlage 1 zumindest von einem Teil der Abgasströmung beaufschlagbar ist. Erreicht wird dies dadurch, dass das Sammelvolumen 16 unmittelbar der Abgasströmung ausgesetzt ist. Beispielsweise kann wie bei den hier angedeuteten Ausführungsformen der Strömungspfad 18 innerhalb des Abgasstrangs 2 so geführt sein, dass im Bereich des Sumpfes 15 zumindest für einen Teil der Abgasströmung eine Strömungsumlenkung erfolgt. Beispielsweise können im Bereich des Sumpfes 15 eine Anströmlängsmittelachse 21 und eine Abströmlängsmittelachse 22 einen Winkel 23 einschließen. Die Anströmlängsmittelachse 21 herrscht in einem an den Sumpf 15 stromauf anschließenden Abschnitt des Abgasstrangs 2 vor, während die Abströmlängsmittelachse 22 in einem stromab an den Sumpf 15 angrenzenden Abschnitt des Abgasstrangs 2 vorherrscht. Durch diesen Knick des Abgasstrangs 2 beziehungsweise durch die Umlenkung des Strömungspfads 18 im Bereich des Sumpfs 15 kann eine direkte Beaufschlagung des Sammelvolumens 16 mit heißen Abgasen erreicht werden. Dies unterstützt die Verdampfung des im Sumpf 15 anfallenden Kondensats.

Um die Verdampfung des sich im Sumpf 15 ansammelnden Kondensats zusätzlich zu verbessern, kann der Abgasstrang 2 zumindest im Bereich des Sumpfes 15 mit einer thermischen Isolation 24 versehen sein. Beispielsweise kann hierzu außen an die Wandung 17 des Abgasstrangs 2 im Bereich des Sumpfes 15 ein Blechkörper 25 zur Ausbildung eines Hohlraums angebracht sein, der insbesondere mit einem thermisch isolierenden Material befüllt sein kann. Durch diese Isolation 24 kann eine thermische Abstrahlung nach außen im Bereich des Sumpfes 15 reduziert werden, was ein Auskühlen des Kondensats verlangsamt. Im Gegenzug wird dadurch das Aufheizen des Kondensats zum Verdampfen desselben unterstützt. Sofern der Abgasstrang 2 ohnehin eine thermische Isolation aufweist, kann vorgesehen sein, diese zumindest im Bereich des Sumpfes 15 stärker auszubilden als in dazu benachbarten Bereichen des Abgasstrangs 2.

Fig. 2 ist entnehmbar, dass der Sumpf 15 kielförmig oder rinnenförmig ausgestaltet sein kann, wodurch die Sammelwirkung zur Mitte des Sammelvolumens 16 hin konzentriert wird.

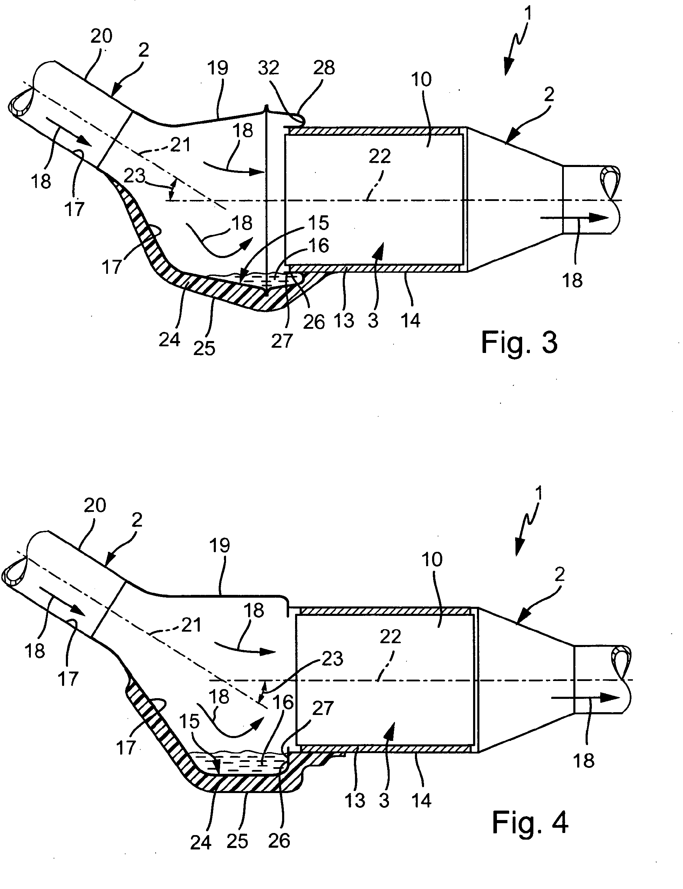

Die Fig. 3 und 4 zeigen Ausführungsformen, bei denen der Sumpf 15 mit einem Schwappschutz 26 ausgestattet ist. Der Schwappschutz 26 ist dabei zumindest in einem dem SCR-Katalysator-System 3 zugewandten Abschnitt des Sumpfes 15 ausgebildet. Der Schwappschutz 26 dient dazu, ein Ausfließen des Kondensats aus dem Sammelvolumen 16 zumindest in Richtung zum SCR-Katalysator-System 3 zu behindern, für den Fall, dass sich durch Beschleunigungen des mit der Abgasanlage 1 ausgestatteten Fahrzeugs 6 eine Bewegung in der Kondensationsflüssigkeit ergibt. Bei den gezeigten Ausführungsformen ist der Schwappschutz 26 jeweils durch einen Sumpfrand 27 gebildet. Bei der in Fig. 3 gezeigten Ausführungsform ist der Sumpfrand 27 in einem dem SCR-Katalysator-System 3 zugewandten Bereich exemplarisch an einem separaten Bauteil 28 ausgebildet, über das der Einlasstrichter 19 mit dem Gehäuse 14, in dem das SCR-Katalysator-System 3 angeordnet ist, verbunden ist. Ebenso kann der Sumpfrand 27 integral am Einlasstrichter 19 oder integral am Gehäuse 14 ausgebildet sein. Bei der in Fig. 3 gezeigten Ausführungsform ist der Sumpfrand 27 im abströmseitigen Bereich so geformt beziehungsweise ausgestaltet, dass er das Sammelvolumen 16 randseitig im wesentlichen parallel zum Strömungspfad 18, also parallel zur Abströmlängsmittelachse 22, überdeckt. Gleichzeitig ist in diesem Fall das gesamte Bauteil 28 so ausgestaltet, dass es eine abströmseitig an den Sumpf 15 angrenzende Rinne 32 bildet, die den Strömungspfad 18 umfangsmäßig beziehungsweise ringförmig umschließt und Flüssigkeit, die aufgrund der Strömungskräfte entlang der Wandung 17 stromab fließt, sammelt und dem Sumpf 15 zuführt.

Bei der in Fig. 4 gezeigten Ausführungsform ist der Sumpfrand 27 integral am Einlasstrichter 19 ausgeformt, wobei er so gestaltet ist, dass er sich in dem dem SCR-Katalysator-System 3 zugewandten Bereich quer zum Strömungspfad 18 beziehungsweise quer zur Abströmlängsmittelachse 22 erstreckt. Darüber hinaus kann sich der Sumpfrand 27 zumindest geringfügig bis in den Strömungspfad 18 hinein erstrecken.

Die Fig. 5 und 6 dienen zur Veranschaulichung eines bevorzugten Einbauorts beziehungsweise einer bevorzugten Positionierung des Sumpfes 15 innerhalb des Abgasstrangs 2 bei am Fahrzeug 6 angebrachter Abgasanlage 1. Die Abgasanlage 1 erstreckt sich weitgehend entlang eines Unterbodens 28 des Fahrzeugs 6, wobei in der Regel eine mittige Anordnung bezüglich der Längsmittelachse des Fahrzeugs 6 bevorzugt wird. Zur Realisierung einer geforderten Mindestbodenfreiheit 29 bezüglich der Fahrzeugquerrichtung ist beispielsweise der Sumpf 15 aus der Längsmittelebene des Fahrzeugs 6 seitlich versetzt, nämlich in Richtung eines der Räder 30 angeordnet. Hierdurch ist es möglich, den Sumpf 15 tiefer als die mittig am Fahrzeug 6 angeordneten übrigen Komponenten der Abgasanlage 1 am Fahrzeug 6 zu positionieren und dennoch den gewünschten Wert für die Bodenfreiheit 29 zu erreichen. Ferner kann der Sumpf 15 gemäß Fig. 6 bezüglich einer Längsmitte des Fahrzeugs, vorzugsweise nach vorn, versetzt angeordnet sein, und zwar vorzugsweise ebenfalls relativ nahe an einem der Räder 30. Hierdurch können für das Fahrzeug 6 gewünschte Böschungswinkel oder Rampenwinkel 31 realisiert werden, auch wenn der Sumpf 15 tiefer liegt als mittig angeordnete Komponenten der Abgasanlage 1, hier das SCR-Katalysator-System 3. Insbesondere ist der Sumpf 15 durch die hier gezeigten bevorzugten Einbauzustände der Abgasanlage 1 an einer vor Spritzwasser und/oder vor Fahrtwind geschützten Stelle am Unterboden 28 angeordnet. Hierdurch können kühlende Effekte einer Beaufschlagung mit Fahrtwind beziehungsweise einer Beaufschlagung mit Spritzwasser im Bereich des Sumpfs 15 reduziert werden, was die Verdampfung des Kondensats im Sumpf begünstigt.

## Patentansprüche

1. Abgasanlage für eine Brennkraftmaschine (5), insbesondere in einem Kraftfahrzeug (6)
- mit einem Abgas führenden Abgasstrang (2),
- mit einem im Abgasstrang (2) angeordneten Katalysator-System (3), insbesondere ein SCR-Katalysator-System (3),
- mit einer am Abgasstrang (2) stromauf des Katalysator-Systems (3) angeordneten Einspritzeinrichtung (4) zum Einspritzen einer Flüssigkeit, insbesondere eine wässrige Harnstofflösung, in den Abgasstrang (2),
- wobei im Abgasstrang (2) zwischen der Einspritzeinrichtung (4) und dem Katalysator-System (3) ein Sumpf (15) ausgebildet ist, der ein Sammelvolumen (16) zur Aufnahme von Kondensationsflüssigkeit aufweist,
**dadurch gekennzeichnet,**
- **dass** der Sumpf (15) in einem Einlasstrichter (19) eines das Katalysator-System (3) enthaltenden Gehäuses (14) ausgebildet ist, oder
- **dass** der Sumpf (15) in einem zu einem das Katalysator-System (3) enthaltenden Gehäuse (14) führenden Abgasrohr (20) des Abgasstrangs (2) ausgebildet und durch eine Mulde oder Ausbuchtung gebildet ist, die in einer den Strömungspfad (18) begrenzenden Wandung (17) des Abgasstrangs (2) ausgebildet ist.

2. Abgasanlage nach Anspruch 1,
**dadurch gekennzeichnet,**
**dass** der Sumpf (15) im Einbauzustand der Abgasanlage (1) nach unten an den Strömungspfad (18) des Abgasstrangs (2) angrenzt.

3. Abgasanlage nach Anspruch 1 oder 2,
**dadurch gekennzeichnet,**
**dass** der Sumpf (15) im Einbauzustand der Abgasanlage (1) an der tiefsten Stelle der Abgasanlage (1) ausgebildet ist.

4. Abgasanlage nach einem der Ansprüche 1 bis 3,
**dadurch gekennzeichnet,**
**dass** der Sumpf (15) im Einbauzustand der Abgasanlage (1) an der tiefsten Stelle eines zwischen der Einspritzeinrichtung (4) und dem Katalysator-System (3) liegenden Abschnitts des Abgasstrangs (2) ausgebildet ist.

5. Abgasanlage nach einem der Ansprüche 1 bis 4,
**dadurch gekennzeichnet,**
**dass** der Sumpf (15) im Abgasstrang (2) so angeordnet ist, dass sein Sammelvolumen (16) zumindest von einem Teil der Abgasströmung beaufschlagt ist.

6. Abgasanlage nach einem der Ansprüche 1 bis 5,
**dadurch gekennzeichnet,**
**dass** der Strömungspfad (18) im Abgasstrang (2) so geführt ist, dass sich im Bereich des Sumpfs (15) zumindest für einen Teil der Abgasströmung eine Strömungsumlenkung ausbildet.

7. Abgasanlage nach einem der Ansprüche 1 bis 6,
**dadurch gekennzeichnet,**
**dass** der Abgasstrang (2) zumindest im Bereich des Sumpfs (15) eine thermische Isolation (24) aufweist.

8. Abgasanlage nach einem der Ansprüche 1 bis 7,
**dadurch gekennzeichnet,**
**dass** der Abgasstrang (2) im Bereich des Sumpfs (15) stärker thermisch isoliert ist als in dazu benachbarten Bereichen.

9. Abgasanlage nach einem der Ansprüche 1 bis 8,
**dadurch gekennzeichnet,**
**dass** der Sumpf (15) im Einbauzustand der Abgasanlage (1) an einer vor Spritzwasser und/oder vor Fahrtwind geschützten Stelle am Unterboden (28) des Fahrzeugs (6) angeordnet ist.

10. Abgasanlage nach einem der Ansprüche 1 bis 9,
**dadurch gekennzeichnet,**
**dass** der Sumpf (15) mit einem Schwappschutz (26) ausgestattet ist, der bei Bewegungen in der Kondensationsflüssigkeit ein Ausfließen der Kondensationsflüssigkeit aus dem Sammelvolumen (16) zumindest in Richtung des Katalysator-Systems (3) behindert.

11. Abgasanlage nach Anspruch 10,
**dadurch gekennzeichnet,**
**dass** der Schwappschutz (26) durch einen Sumpfrand (27) gebildet ist, der zumindest in einem dem Katalysator-System (3) zugewandten Bereich des Sumpfs (15) quer zum Strömungspfad (18) und/oder vertikal ausgerichtet ist und/oder in den Strömungspfad (18) vorsteht und/oder das Sammelvolumen (16) parallel zum Strömungspfad (18) randseitig überdeckt.

## Claims

1. An exhaust system for a combustion engine (5), more preferably in a motor vehicle (6)
- with an exhaust gas line (2) conducting exhaust gas,
- with a catalytic converter system (3), more preferably an SCR catalytic converter system (3) arranged in the exhaust gas line (2),
- with an injection device (4) for injecting a liquid, more preferably a watery urea solution into the exhaust gas line (2) arranged on the exhaust gas line upstream of the catalytic converter system (3),
- wherein in the exhaust gas line (2) between the injection device (4) and the catalytic converter system (3) a sump (15) is formed, which has a storage volume (16) for accommodating condensation liquid,
**characterized in that**
- the sump (15) is formed in an inlet funnel (19) of a housing (14) containing the catalytic converter system (3), or
- the sump (15) is formed in an exhaust pipe (20) of the exhaust line (2) leading to a housing (14) containing the catalytic converter system (3) and is formed through a trough or bulge which is formed in a wall (17) of the exhaust line (2) limiting the flow path (18).

2. The exhaust system according to Claim 1,
**characterized in that**
the sump (15) in the installation state of the exhaust system (1) at the bottom adjoins the flow path (18) of the exhaust line (2).

3. The exhaust system according to Claim 1 or 2,
**characterized in that**
the sump (15) in the installation state of the exhaust system (1) is formed at the deepest point of the exhaust system (1).

4. The exhaust system according to any one of the Claims 1 to 3,
**characterized in that**
the sump (15) in the installation state of the exhaust system (1) is formed at the deepest point of a section of the exhaust line (2) located between the injection device (4) and the catalytic converter system (3).

5. The exhaust system according to any one of the Claims 1 to 4,
**characterized in that**
the sump (15) in the exhaust line (2) is so arranged that at least a part of the exhaust gas flow is admitted into its storage volume (16).

6. The exhaust system according to any one of the Claims 1 to 5,
**characterized in that**
the flow path (18) in the exhaust line (2) is routed so that in the region of the sump (15) a flow deflection is formed at least for a part of the exhaust gas flow.

7. The exhaust system according to any one of the Claims 1 to 6,
**characterized in that**
the exhaust line (2) at least in the region of the sump (15) comprises a thermal insulation (24).

8. The exhaust system according to any one of the Claims 1 to 7,
**characterized in that**
the exhaust line (2) in the region of the sump (15) is more thermally insulated than in the adjacent regions.

9. The exhaust system according to any one of the Claims 1 to 8,
**characterized in that**
the sump (15) in the installation state of the exhaust system (1) is arranged on a location on the under body (28) of the vehicle (6) protected from splash water and/or air stream.

10. The exhaust system according to any one of the Claims 1 to 9,
**characterized in that**
the sump (15) is equipped with a slosh guard (26) which during movements in the condensation liquid obstructs out flowing of the condensation liquid from the storage volume (16) at least in the direction of the catalytic converter system (3).

11. The exhaust system according to Claim 10,
**characterized in that**
the slosh guard (26) is formed by a sump rim (27) which at least in a region of the sump (15) facing the catalytic converter system (3) is orientated transversely to the flow path (18) and/or vertically and/or protrudes into the flow path (18) and/or covers the storage volume (16) on the rim side parallel to the flow path (18).

## Revendications

1. Installation d'échappement pour un moteur à combustion interne (5), en particulier sur un véhicule automobile (6) comprenant
- une branche d'échappement (2) véhiculant des gaz d'échappement
- un système de catalyseur (3) disposé dans la branche d'échappement (2), en particulier un système de catalyseur à SCR (3),
- un dispositif d'injection (4) disposé sur la branche d'échappement (2) en aval du système de catalyseur (3) pour l'injection d'un liquide, en particulier d'une solution d'urée aqueuse, dans la branche d'échappement (2),
- un réservoir (15) étant conçu dans la branche d'échappement (2) entre le dispositif d'injection (4) et le système de catalyseur (3), qui présente un volume de collecte (16) pour le logement de liquide de condensation,
**caractérisée en ce que**
- le réservoir (15) est conçu dans un entonnoir d'entrée (19) d'un boîtier (14) contenant le système de catalyseur (3),
- **en ce que** le réservoir (15) est réalisé dans un tuyau d'échappement (20), aboutissant à un boîtier (14) contenant le système de catalyseur (3), de la branche d'échappement (2) et est formé par une cavité ou un évasement, laquelle ou lequel est réalisé(e) dans une paroi (17), délimitant le chemin d'écoulement (18), de la branche d'échappement (2).

2. Installation d'échappement selon la revendication 1,
**caractérisée en ce que**
le réservoir (15) est contigu au chemin d'écoulement (18) de la branche d'échappement (2) vers le bas lorsque l'installation d'échappement (1) est montée.

3. Installation d'échappement selon la revendication 1 ou 2,
**caractérisée en ce que**,
le réservoir (15) est réalisé à l'endroit le plus bas de l'installation d'échappement (1) lorsque l'installation d'échappement (1) est montée.

4. Installation d'échappement selon l'une quelconque des revendications 1 à 3 ;
**caractérisée en ce que**
le réservoir (15) est réalisé à l'endroit le plus bas d'une partie, située entre le dispositif d'injection (4) et le système de catalyseur (3), de la branche d'échappement (2) lorsque l'installation d'échappement (1) est montée.

5. Installation d'échappement selon l'une quelconque des revendications 1 à 4,
**caractérisée en ce que**
le réservoir (15) est disposé dans la branche d'échappement (2) de telle sorte que son volume collecteur (16) est alimenté au moins par une partie de l'écoulement des gaz d'échappement.

6. Installation d'échappement selon l'une quelconque des revendications 1 à 5,
**caractérisée en ce que**
le chemin d'écoulement (18) est guidé dans la branche d'échappement (2) de telle sorte qu'une inversion de l'écoulement se forme dans la zone du réservoir (15) au moins pour une partie de l'écoulement des gaz d'échappement.

7. Installation d'échappement selon l'une quelconque des revendications 1 à 6,
**caractérisée en ce que**
la branche d'échappement (2) présente une isolation (24) thermique au moins dans la zone du réservoir (15).

8. Installation d'échappement selon l'une quelconque des revendications 1 à 7,
**caractérisée en ce que**
la branche d'échappement (2) est plus isolée thermiquement dans la zone du réservoir (15) que dans les zones voisines de cette zone.

9. Installation d'échappement selon l'une quelconque des revendications 1 à 8,
**caractérisée en ce que**
le réservoir (15) est disposée en un endroit, protégé des projections d'eau et/ou du vent relatif sur le plancher (28) du véhicule (6) lorsque l'installation d'échappement (1) est montée.

10. Installation d'échappement selon l'une quelconque des revendications 1 à 9,
**caractérisée en ce que**
le réservoir (15) est équipé d'un anticlapotis (26), qui empêche une sortie du liquide de condensation du volume collecteur (16) au moins en direction du système de catalyseur (3) en cas de mouvements dans le liquide de condensation.

11. Installation d'échappement selon la revendication 10,
**caractérisée en ce que**
l'anticlapotis (26) est formé par un bord de réservoir (27), qui est orienté transversalement au chemin d'écoulement (18) et/ou verticalement au moins dans une zone, tournée vers le système de catalyseur (3), du réservoir (15) et/ou dépasse dans le chemin d'écoulement (18) et/ou recouvre côté bord le volume collecteur (16) parallèlement au chemin d'écoulement (18).
